# EUROPEAN PATENT APPLICATION

(11) **EP 2 361 956 A1**
(43) Date of publication of application: **31.08.2011**
(21) Application number: 10154194.4
(22) Date of filing: 22.02.2010
(51) Int. Cl.: C09D 5/03, C09D 17/00, C08J 3/00, C08J 3/22

(54) **Composition of pigments soluble in water and/or in organic solvents**

(71) Applicant: Inxel Trademark & Patents SAGL, 6901 Lugano (CH)
(72) Inventor: Broggi, Giovanni, I-20100, Milano (IT)
(74) Representative: Pistolesi, Roberto

(57) **Abstract**

A composition of pigments is described, said composition consisting of: (a) at least one inorganic and/or organic pigment; and (b) at least one dispersing and/or wetting agent; and at least one component selected from: (c) solubilization accelerating agents; (d) inorganic fillers; (e) binding agents; (f) acrylic, aldehyde and/or ketone resins; (g) rheological agents; (h) anti-foaming agents.

This composition is preferably in the form of tablets and has the following advantages compared to the compositions known in the art:
• pigmentation of the paints in an eco-compatible manner;
• universal compatibility with the various painting systems;
• extremely short duration of the paint pigmentation process;
• easy transportation and dosage;
• low-cost paint pigmentation process;
• simple and low-cost production process.

## Description

The present invention relates to a composition consisting of: (a) at least one inorganic and/or organic pigment; and (b) at least one dispersing and/or wetting agent; and at least one component selected from: (c) solubilization accelerating agents; (d) inorganic fillers; (e) binding agents; (f) acrylic, aldehyde and/or ketone resins; (g) rheological agents; (h) anti-foaming agents.

This composition is preferably provided in the form of tablets. The present invention also relates to the associated production process.

The main objects of the invention are:
- pigmentation of the paints in an eco-compatible manner;
- universal compatibility with the various painting systems;
- extremely short duration of the paint pigmentation process;
- easy transportation and dosage;
- low-cost paint pigmentation process;
- simple and low-cost production process.

### Background art

As is known, pigments are solids of an organic and inorganic nature which are defined as such when they are used within a fixing system, absorbing part of the light and reflecting the complementary part thereof which forms the colour of the coated surface.

As such, they are solids with a very irregular surface which varies from one pigment to another and have the property of interfacing with other substances completely different from each other and greatly influenced by physical and chemical conditions of the contact elements.

The difficulties of integrating pigments in a wide range of resin-based vehicle systems are well known.

In the liquid-paint formulations which use an organic solvent or water as the liquid phase, incorporation of the pigments is conventionally performed by mixing the pigments with resin solutions.

The presence of organic solvent and/or water is negative because of its flocculating properties which tend to make contact between resin and pigment unstable.

In order to limit this effect, anti-flocculating chemical compounds are normally introduced into these mixtures of pigments and resins dissolved in solvent and/or water, these compounds having the property of modifying and adjusting the electrostatic properties of the surfaces of the pigments and modifying the surface tension of the solution of resin in solvent.

As a result of this negative effect which is typical of the pigment/resin/solvent system, the colour mixtures can be defined as unstable systems in which the chromatic effect of the finished paint may change over time.

Improvements to this system have been achieved by techniques involving predispersion and corresponding grinding of pigments, so as to develop paints in the form of powder or paste, in which the pigment is incorporated in specific resins, including acrylic, aldehyde and/or ketone resins, but dissolved in an organic solvent and/or water and with the use of combinations of chemical additives in order to interface the surface of the specific pigment with the selected dissolved resin. These systems are described, for example, in the international patent applications W02007007359, W02008119390, W02008018097, W02008012848, W02007080612 and W02006082603, in the name of the same Applicant.

Pigment compositions containing aldehyde or ketone resins are also described in US6734231 and EP432480. Also widely known are the problems associated with the use of the said liquid pastes, including sedimentation, difficulty of transportation, limited shelf-life, as well as cleanliness, which is a critical problem in particular in the so-called points of sale (POS).

Moreover, in order to facilitate dosage of the pigment (colouring agent), on many occasions it is mixed with inert pigments (fillers) in order to dilute the concentration and reduce the risk of difficulties associated with dosage of small amounts. The simultaneous presence of various pigments, as for example described in US20070079728, results in the need to use, in many cases, different types of chemical additives, often with properties which conflict and interfere with each other.

As a result, formation of the colour, arising from mixing of different pigments, is subject to inconsistency from one product to another, due not only to the change in environmental conditions, which vary on each occasion, but also to the different properties of the pigment surface and the surface tension properties of the polymers in the melted state which, even though not differing from batch to batch, may be slightly different.

The object of the present invention is to provide a composition, preferably in the form of tablets, which is able to overcome the drawbacks of the prior art and achieve the abovementioned aims.

In connection with this object, one aim of the invention is provide a composition in the form of tablets, granules or a powder which can be used, by means of simple solubilization, as:
- a semifinished product for colouring and pigmenting liquid paints, preferably water-based paints for the building sector;
- a semifinished product for colouring and pigmenting powder paints;
- a semifinished product for the production of concentrated liquid pastes, after dissolving in an organic solvent or water;
- a semifinished product for colouring and pigmenting both thermoplastic plastics and thermosetting plastics [i.e. polyethylene, polypropylene, polyethylene terephthalate (PET), acrylonitrile-butadiene-styrene (ABS), polyurethane or polyamide plastics];
- a semifinished product for colouring and pigmenting inks.

The coating which the composition ensures for the pigments contained therein is able to overcome the difficulties which typically occur during use of the pigments disclosed by the prior art.

In particular, the composition according to the present invention may be used as a semifinished product in powder paint formulations, as an alternative to pure pigments which are not precoated. Use thereof is able to achieve a greater continuity with regard to formation of the colour and reproducibility of the colour of the colouring system from one batch to another, together with a reduction in the amount of pigment originally used, owing to the greater colorimetric yield compared to that of pre-coated pigments. Moreover, the tablet (or granule) form makes automated transportation possible (for example using pneumatic means), thus ensuring a clean and eco-compatible environment; finally, dosage can be performed in an extremely simple and precise manner.

In particular, compared to the coatings known in the art, the tablet-form composition according to the present invention is completely dust-free, has a high colorimetric yield (with a consequent reduction in tinting costs) and is free from volatile organic compounds (VOC) and is therefore odourless. It also has an optimum dispersability (i.e. no flocculation) and is easy to dissolve and is characterized by universal compatibility with the various painting systems, inks and plastics. In addition, it is particularly suitable, after mixing with water and a basic-pH vehicle consisting of one or more resins, water and any coalescents (e.g. glycols) and additives (with the possible addition of titanium dioxide), optionally resins (for example acrylic, polyurethane, epoxy resins, etc.) for the preparation of liquid paints intended for the building sector.

### Description of the invention

The present invention relates to a composition containing and preferably consisting of:
(a) at least one inorganic and/or organic pigment; (b) at least one dispersing and/or wetting agent; and at least one component selected from: (c) solubilization accelerating agents; (d) inorganic fillers, preferably kaolin, barium sulphate, calcium carbonate, pyrogenic silica (for example Aerosil® manufactured by Evonik); (e) binding agents; (f) acrylic, aldehyde and/or ketone resins; (g) rheological agents; (h) anti-foaming agents.

For the purposes of the present invention, the term "dispersing agent" refers principally to compounds which facilitate grinding and solubilization of the components of the composition according to the present invention.

The term "wetting agent" refers principally to compounds which facilitate absorption of the liquid components of the composition according the present invention on the pigment and on the fillers.

Normally the "dispersing" compounds also have a "wetting" function, such as the dispersing and wetting additives marketed by Evonik under the trademark Tego^{®}Dispers.

The term "solubilization accelerating agent" refers principally to a compound which accelerates the solubilization of the pigment in water or in an organic solvent.

The term "acrylic resin" refers principally to a water-soluble polyaddition product of styrene, maleic anhydride, methyl meta acrylic monomers and acrylic monomer, including acid and esters and also containing a hydroxy(propyl) function.

The term "aldehyde and/or ketone resin" refers principally to a condensation product of an aldehyde (preferably aliphatic aldehyde) or a ketone (preferably cyclohexanone or methylcyclohexanone), optionally with condensation products such as urea or formaldehyde.

The term "acidity number" refers to the average number of carboxy groups/resin units.

The term "rheological agent" refers principally to a compound which modifies the rheology of a fluid obtained by mixing the composition according to the present invention with water or with an organic solvent.

The term "anti-foaming agent" refers principally to a compound which eliminates the air from a fluid obtained by mixing the composition according to the present invention with water or therefore prevents or reduces the formation of foam.

The composition of the present invention comprises and preferably consists of:
(a) 30 to 95% by weight of at least one inorganic and/or organic pigment; and
(b) 0.5% to 30% by weight of a dispersing and/or wetting agent;
   and at least one component selected from:
(c) 2 to 50% by weight of at least one solubilization accelerating agent;
(d) 0 to 50% by weight of at least one inorganic filler;
(e) 0 to 10% by weight of at least one binding agent;
(f) 0 to 50% by weight of at least one acrylic, aldehyde and/or ketone resin;
(g) 0.5 to 20% by weight of at least one rheological agent;
(h) 0.5 to 10% by weight of at least one anti-foaming agent.

The percentages by weight relate to the overall weight of the composition according to the invention; according to a preferred aspect, the percentage sum of the components (a), (b) and at least one of the components (c), (d), (e), (f), (g) and (h) is 100.

According to a preferred aspect of the invention, the inorganic and/or organic pigments (a) are present in an amount of 40 to 90% by weight; the dispersing and/or wetting agents (b) are present in an amount of 0.5 to 20% by weight; the optional solubilization accelerating agents (c) are present in an amount of 5 to 40% by weight; the optional inorganic fillers (d) are present in an amount of 5 to 30% by weight; the optional binding agents (e) are present in an amount of 0.5 to 5% by weight; the optional acrylic, aldehyde and/or ketone resins (f) are present in an amount of 5 to 40% by weight; the optional rheological agents (g) are present in an amount of 2 to 15% by weight; the optional anti-foaming agents (h) are present in an amount of 2 to 5% by weight.

The use of the composition according to the present invention is in particular, but not exclusively, intended for use: a) in decorative painting and/or painting of buildings; b) solvent-based paints for industry; c) water-based paints for industry; d) water-based paints for motor-vehicles; e) water-based paints for motor-vehicles. In the case of inorganic pigments, the composition contains preferably 60 to 90% by weight of pigment. In the case of organic pigments, the composition contains preferably 40 to 80% by weight of pigment.

In particular, in the case where the composition according to the invention is intended for the preparation of water-based liquid paints intended for use in decorative painting and/or the painting of buildings, two different types of products are possible, depending on the ways in which the liquid paints are prepared.

The liquid paints to be used in this sector may be prepared at the production plant (in-plant) or at the points of sale (POS).

The paints produced in-plant are in fact normally prepared by mixing one or more acrylic resins (or, for example, polyurethane resins, epoxy resins, etc.) with water and a vehicle with a basic pH (i.e. higher than 7), consisting of one or more resins, water and any coalescents (for example glycols) and additives, to which white pigment (titanium dioxide), fillers (for example calcium carbonate, kaolin, etc.) are optionally added.

At the production plant, in addition to coloured paints, so-called concentrated liquid pastes, or coloured pastes containing ground pigments, water and dispersing agents are also produced.

The concentrated paints and liquid pastes thus prepared are packaged (the paints in plastic or metal containers, the pastes in mainly plastic vessels) and then dispatched to the POS.

The preparation of the colouring paints at the POS, i.e. mainly shops, large warehouses and shopping centres, is performed by means of the simple addition of the liquid colouring pastes to the water-borne base paint with basic pH to be coloured, to which titanium dioxide is optionally added, followed by very rapid mixing/solubilization.

It must also be considered that the characteristics of the machinery and the mixing process are different at the POS compared to the production plant.

The POS require in fact small volumes, i.e. not greater than about 25 litres, and solubilization times of no longer than 10 minutes (preferably ≤ 5 minutes). The production plants instead do not require such a short time since the end user is not present and, owing to the normally larger spaces available compared to the POS, may process significantly larger volumes of paint; the solubilization time is normally between 20 and 50 minutes.

Therefore, according to a preferred aspect of the present invention, the composition according to the invention may have different contents in terms of components, depending on whether they are intended for the preparation of water-based liquid paints at the POS or the production plants.

In particular, if intended for the preparation of water-based liquid paints at the POS, the composition will preferably have the preferred quantitive and qualitative characteristics indicated below:
(a) 40 to 90% by weight of at least one inorganic and/or organic pigment; and
(b) 0.5% to 20% by weight of a dispersing and/or wetting agent;
   and at least one component selected from:
(c) 5 to 40% by weight of at least one solubilization accelerating agent;
(d) 5 to 30% by weight of at least one inorganic filler;
(e) 0.5 to 5% by weight of at least one binding agent;
(f) 5 to 40% by weight of at least one acrylic resin;
(g) 2 to 20% by weight of at least one rheological agent;
(h) 2 to 5% by weight of at least one anti-foaming agent.

If, instead, it is intended for the preparation of water-based liquid paints at the production plants, the composition will preferably have the preferred quantitive and qualitative characteristics indicated below:
(a) 70 to 90% by weight of at least one inorganic and/or organic pigment; and
(b) 5 to 20% by weight of at least one dispersing and/or wetting agent;
   and at least one component selected from:
(c) 5 to 20% by weight of at least one solubilization accelerating agent;
(d) 5 to 30% by weight of at least one inorganic filler;
(e) 0.5 to 5% by weight of at least one binding agent;
(f) 5 to 20% by weight of at least one acrylic resin;
(g) 2 to 15% by weight of at least one rheological agent;
(h) 2 to 5% by weight of at least one anti-foaming agent.

The pigments which can be used for the purposes of the present invention are all substances which absorb a part or all of the light spectrum and reflect the complementary part thereof, forming the visible colour; for the purposes of the present invention, the term "organic pigment" comprises also black pigments resulting from organic combustion (so-called "carbon black"). In particular, the types of pigment indicated below may be used:
- Iron oxide pigments, in all their shades of yellow, brown, red and black; and in all their physical forms and particle-size categories.
- Titanium oxide pigments in all their different inorganic surface treatments.
- Chromium oxide pigments, also co-precipitated with nickel and nickel titanates.
- Black pigments from organic combustion (so-called "carbon black").
- Blue and green pigments derived from copper phthalocyanine, also chlorinated and brominated in the various alpha, beta and epsilon crystalline forms.
- Yellow pigments derived from lead sulphochromate.
- Yellow pigments derived from lead bismuth vanadate.
- Orange pigments derived from lead sulphochromate molybdate.
- Yellow pigments of an organic nature based on arylamides.
- Orange pigments of an organic nature based on naphthol.
- Orange pigments of an organic nature based on diketo-pyrrolo-pyrole.
- Red pigments based on manganese salts of azo dyes.
- Red pigments based on manganese salts of beta-oxynaphthoic acid.
- Red organic quinacridone pigments.
- Red organic anthraquinone pigments.

From among the so-called solubilization accelerating inert agents, the following are particularly suitable for this purpose: alkaline metal and alkaline-earth carbonates and bicarbonates, preferably sodium carbonate (soda); polyvinylpyrrolidone (PVP); polyvinyl alcohols; water-soluble polyethers; ethylene glycols and, in particular, monoethyleneglycol and polypropyleneglycol; water-soluble acrylates; alcohol ethoxylates (non-ionic surfactants); linear alkylbenzene sulphonates, alkyl sulphonates and alcohol ether sulphates (anionic surfactants); betaine (anphoteric surfactants).

The dispersing and/or wetting agents for liquid paints additives are well known in the art and are commercially available. For the purposes of the present invention they are preferably but not exclusively chosen from among:
- those marketed by Evonik under the trademark Tego®Dispers and, in particular, Tego®Dispers 650, 651, 652, 655, 655, 685 and 755W or under the trademarks LAD 604 and LAD 1275: they are, in greater detail, styrene and polyether copolymers, maleic acid amides, fatty acid derivatives, modified polymers having groups with high affinity for the pigments, modified polyethers having groups with high affinity for the pigments, low molecular weight polymers, alkoxylated fatty alcohols;
- those marketed by BYK under the trademark Disperbyk® and, in particular, Disperbyk^{®}180; they are, in greater detail, alkyl ammonium salts and, in particular, alkyl ammonium salts of block copolymers with acid groups;
- those marketed by Urai under the trademark Nuosperse®;
- those marketed by Uniqema under the trademark Atmer®and, in particular, Atmer 116®; they are sorbitan esters and epoxidized soybean oils; in particular it has been found that the presence of epoxidized soybean oils and sorbitan esters, such as ethoxylated sorbitan esters, is particularly advantageous for obtaining a homogeneous flow in the extruded mass and, consequently, for obtaining an end product with the desired properties.

The preferred dispersing and/or wetting agent for the purposes of the present invention is ethoxylated sorbitan ester marketed by Uniqema as Atmer® 116. From among the inorganic or mineral fillers preferably barium sulphate, kaolin and silicon dioxide (marketed by Evonik under the trademark Aerosil® are preferably used.

The binding agents are preferably selected from: modified ketone polyethers with groups having an affinity with the pigments, such as those marketed by Evonik under the trademark Tego^{®}VariPlus EP-UC; solid bonding resins, such as those marketed by Evonik under the trademark Tego®AddBond LTH; lignin sulphonate, such as that marketed by Avebene Aquitaine as Ligninsulfonat N 75 D.

Acrylic, aldehyde and/or ketone resins are also additives which are well-known in the sector of liquid paint formulations using an organic solvent and/or aqueous phase for mixing the pigments with the resin solutions.
- Examples of acrylic resins are the products: Degalan F produced by Evonik Röhm GmbH; Joncryl^{®} 682; Joncryr^{®} 690; Joncryr^{®} 678; Joncryr^{®} HPD 671 distributed by Basf AG; Styrene Maleic Anhydride copolymers distributed by Sartomar as SMA® 1000, 2000 and 3000 and their esters SMA® 1440, 17352, 2625 and 3840.
- Examples of aldehyde or ketone resins are, for example, the products distributed by BASF as Laropal®; in particular, Laropal® A 101 and A 81 are condensation products of urea and aliphatic aldehydes, while the ketone resins are preferably condensation products of methylcyclohexanone or cyclohexanone, such as Laropal^{®} K 80. Laropal^{®} LR 9008 is an aqueous solution of a modified aldehyde resin.

According to a preferred aspect of the invention, the acrylic resin has an acidity number higher than 30 (preferably higher than 50), an average molecular weight of between 1000 and 30,000 g/mol (preferably between 1500 and 20,000 g/mol and/or a glass transition point ("Tg") of between 40° and 130°C, preferably between 45 and 70 °C. The aldehyde and/or ketone resins have preferably an average molecular weight of between 800 and 2000 g/mol and/or a glass transition point of between 40° and 60 °C.

The rheological agents are preferably selected from bentonite, such as that marketed by Elementis Specialties under the trademark Bentone^{®} 34; the ethers of cellulose (i.e. hydroxyalkyl cellulose), preferably the C₁-C₄ ethers of cellulose, such as hydroxyethyl cellulose marketed by Clariant under the trademark Tylose^{®}; the esters of cellulose, preferably the C₁-C₄ esters of cellulose. such as cellulose acetate (CA), cellulose acetate propionate (CAP), cellulose acetate butyrate (CAB) marketed by Eastman; the esters of carboxymethyl cellulose, preferably the C₁-C₄ esters of carboxymethyl cellulose, such as carboxymethyl cellulose acetate butyrate (CMCAB) marketed by Eastman.

The anti-foaming agent is preferably a polyether siloxane copolymer, preferably containing pyrogenic silica, such as those marketed by Evonik under the trademarks Tego^{®} Airex 901 W and Tego^{®} Foamex 810 or that marketed by Byk Chemie AG under the trademark Byk^{®} 024.

The composition in question may be in the form of tablets, granules or powders. In the case of tablets, the form is preferably cylindrical; preferably these tablets have a diameter of 2 to 20 mm (preferably 3 to 16 mm) and height of 1 to 14 mm (preferably 2 to 10 mm). In particular, in the case of tablets for the production of water-based liquid paints, they have preferably a diameter of 4-6 mm and a height of 1-3 mm, if intended for use at the POS; and a diameter of 10-12 mm and height of 2-4 mm if intended to be used at the production plants.

In the case of a powder composition, the powder particles may have dimensions of between 5 and 400 µ, (preferably 30-300 µ).

In the case of granule compositions, the granules have a diameter of between 1 and 3 mm.

In the simplest of cases, the compositions according to the present invention are prepared preferably by means of simple mixing and simultaneous grinding of the components and, optionally, subsequent compression of the mixture thus obtained. The mixing/grinding of the components listed above may be performed using mixers or turbo-mixers which are normally commercially available, such as the turbo-mixer CM600 produced by the company Mixaco; mixing is preferably performed in the dry state, i.e. without the presence of organic solvents and/or water, operating at a mixing speed preferably of between 500 and 1500 rpm, even more preferably of between 800 and 1000 rpm.

Any compression operations may be performed by means of compression machines which are normally commercially available, such as the rotary press with 43 or 64 punches, KORSCH PH343, PR3000 series, manufactured by KORSCH AG.

In the case of mixtures which pose blending problems (as may occur, for example, when special pigments such as carbon black or phthalocyanine based pigments are present) it is advisable to introduce an intermediate extrusion stage.

In this case the production sequence would be mixing/grinding → extrusion → mixing/grinding → optional compression

If necessary, the intermediate extrusion stage is also preferably performed in the dry state, i.e. without the presence of organic solvents and/or water. This extrusion operation may be performed using the twin-screw extruders which are commonly available on the market, such as the extruder model 87 MAXX made by Leistritz AG; extrusion is preferably performed at a speed of rotation of the screws of between 150 and 180 rpm and/or at a temperature of between 50 and 130° C.

As mentioned above, one of the main uses of the particle composition according to the present invention is the pigmentation of base paints directly at the POS or at the production plants, or the preparation of water-based liquid paints to be used in the building sector.

Solubilization of the tablets containing the pigment is performed directly in the base paint to be coloured (namely an aqueous solution with basic pH, optionally containing white pigment, such as titanium dioxide and one or more resins such as acrylic, polyurethane or epoxy resins, etc.), in less than 20 minutes, preferably less than 10 minutes, with stirring preferably at a speed of between 1000 and 4000 rpm, even more preferably between 2500 and 3500 rpm; the colouring process is thus completed in a totally eco-compatible manner, without dust generation. The liquid paints thus obtained are very stable; in particular it has been observed that the viscosity remains stable even one week after mixing both at room temperature and at 50° C.

Another important use of the present innovation consists in the liquid paints for the solvent-borne paints industry or water-borne paints industry; the solvent-borne paints are coloured by means of incorporation (solubilization) of the tablets in the solvent-borne paint to be coloured, together with any additives, while the water-borne paints are coloured by means of incorporation (solubilization) of the tablets in the water-borne paint with basic pH to be coloured, together with any additives. In addition to the colouring of paints, the present innovation is used for the preparation of solvent-borne or water-borne concentrated liquid pastes. The solvent-based concentrated liquid pastes are normally obtained by means of incorporation (solubilization) of the tablets in a vehicle consisting of one or more resins, one or more solvents and additives; while the water-based concentrated liquid pastes are normally obtained by means of incorporation (solubilization) of the tablets in a basic pH vehicle consisting of one or more resins, water and any coalescents (e.g. glycols) and additives. The pastes thus obtained may be used as semifinished products suitable for the pigmentation of liquid paints.

The particle composition according to the present invention is preferably used in formulations containing a single pigment.

The present invention may be advantageously used in powder paint formulations (as an alternative to pure pigments which are not pre-coated). The main advantages may be summarised as follows: optimum colour formation; reproducibility of the colouring system from one batch to another; reduction in the quantity of pigment originally used due to the greater colorimetric yield.

It has in fact been possible to provide a coating which is able to make up for the lack of standardization of the components which are added during melting of the powder paint polymer, when extrusion is performed in order to incorporate the solid pigments. With the composition according to the present invention it is possible to produce coloured powder paints which have a degree of uniform quality which is no longer dependent on the environmental conditions where incorporation of the pigment in the resin is performed, but determined exclusively by parameters which can be managed by the extrusion process itself.

The tablets according to the present invention may be used to colour polymer plastics such as polyethylene, polypropylene, PET, ABS, polystyrene as well as polyurethane elastomers of varying formulation. The composition may be used individually and/or in combination with other compositions containing the pigments needed to form a given colour.

By means of the metered mixing of various monochromatic tablets it is possible to determine the final colour directly before feeding into the extruder which melts the plastic granules for colouring and/or production of the end product. In other words, it is possible to form a polychromatic colour by simply mixing tablets with different monochromatic colours. It is thus possible to form a colouring system using monochromatic tablets so as to obtain colours composed of different monochromatic pigments.

The process for production of the composition according to the present invention and the process for the production of liquid paints by means of this composition also form further objects of the invention.

The examples below are provided merely by way of non-limiting examples and indicate some of the mixtures possible with the composition according to the present invention; the percentages shown refer to percentages by weight.

### Example 1 (POS water-based paint for building sector)

| | |
|---|---|
| Blue pigment (based on phthalocyanine; p. blue 15:3) | 50% |
| Barium sulphate (filler) | 10% |
| Atmer ®116 (dispersing agent): | 4% |
| Sodium carbonate (accelerating agent): | 36% |

### Example 2 (POS water-based paint for building sector)

| | |
|---|---|
| Black pigment (carbon black); p. black 7) | 60% |
| Barium sulphate (filler) | 10% |
| Atmer®116 (dispersing agent): | 4% |
| Sodium carbonate (accelerating agent): | 26% |

### Example 3 (POS water-based paint for building sector)

| | |
|---|---|
| Yellow pigment (based on yellow iron oxide; py 42); | 75% |
| Atmer ^{®}116 (dispersing agent): | 4% |
| Sodium carbonate (accelerating agent): | 21% |

### Example 4 (POS water-based paint for industry)

| | |
|---|---|
| Yellow pigment (based on yellow iron oxide; py 42); | 70% |
| Degalan VP 1035 F (acrylic resin): | 19% |
| (Disperbyk^{®}180 (dispersing agent): | 11% |

### Example 5 (POS water-based or solvent-based paint for industry)

| | |
|---|---|
| Black pigment (carbon black); p. black 7) | 82% |
| Barium sulphate (filler) | 10% |
| Tego® Dispers 685 (dispersing agent): | 8% |

### Example 6 (POS water-based paint for industry)

| | |
|---|---|
| Red pigment (based on transparent red iron oxide; p. red 101); | 70% |
| Degalan VP 1035 F (acrylic resin): | 19% |
| Tego® Dispers 655 (dispersing agent): | 11% |

### Example 7 (POS solvent-based paint for industry)

| | |
|---|---|
| Black pigment (carbon black FW200 manufactured by Evonik p. black 7): | 50% |
| Laropal A81 (aldehyde resin): | 36% |
| Barium sulphate (filler) | 10% |
| Tego^{®} Dispers 685 (dispersing agent): | 4% |

### Example 8 (POS water-based paint for building sector)

| | |
|---|---|
| Yellow pigment (based on iron oxide manufactured by Siof; py 42); | 75% |
| Sodium carbonate (accelerating agent): | 20.1% |
| Atmer^{®} (116 (dispersing agent): | 4% |
| Tego^{®} Airex 901 W (anti-foaming agent): | 0.4% |
| Bentone 34 (rheological agent): | 0.5% |

### Example 9 (In-plant water-based paint for building sector)

| | |
|---|---|
| Yellow pigment (based on iron oxide manufactured by Siof; py 42); | 85% |
| Sodium carbonate (accelerating agent): | 9.2% |
| Atmer^{®} 116 (dispersing agent): | 5% |
| Tego^{®} Airex 901 W (anti-foaming agent): | 0.3% |
| Bentone 34 (rheological agent): | 0.5% |

### Example 10 (POS water-based paint for building sector)

| | |
|---|---|
| Blue pigment (Hostaperm Blue B2G-L manufactured by Clariant; p. blue 15:3): | 50% |
| Barium sulphate (filler) | 9.7% |
| Sodium carbonate (accelerating agent): | 36% |
| Atmer^{®} 116 (dispersing agent): | 4% |
| Tego^{®} Airex 901 W (anti-foaming agent): | 0.3% |

### Example 11 (POS water-based paint for industry)

| | |
|---|---|
| Black pigment (carbon black manufactured by Evonik; p. black 7): | 60% |
| Barium sulphate (filler) | 9.7% |
| Sodium carbonate (accelerating agent): | 26% |
| Atmer® 116 (dispersing agent): | 4% |
| Tego®Airex 901 W (anti-foaming agent): | 0.3% |

### Example 12 (universal paint for industry)

| | |
|---|---|
| Yellow pigment (based on iron oxide manufactured by Rockwood; py 42); | 90% |
| Barium sulphate (filler) | 5.5% |
| Atmer® 116 (dispersing agent): | 4% |
| Bentone 34 (rheological agent): | 0.5% |

### Example 13 (water-based paint for industry)

| | |
|---|---|
| Yellow pigment (Heucodur Yellow 8G manufactured by Heubach; p. yellow 53): | 90% |
| Aerosil R972 (filler): | 1% |
| Byk 180+LAD604 (dispersing agents): | 3% + 3% |
| Tego^{®} VariPlus EP-UC (binding agent): | 2.5% |
| Bentone 34 (rheological agent): | 0.5% |

### Example 14 (water-based paint for industry)

| | |
|---|---|
| Yellow pigment (Heucodur Yellow G9048 manufactured by Heubach; p. brown 24): | 90% |
| Aerosil R972 (filler): | 1% |
| Byk 180+LAD604 (dispersing agents): | 3% + 3% |
| Tego^{®} VariPlus EP-UC (binding agent): | 2.5% |
| Bentone 34 (rheological agent): | 0.5% |

### Example 15 (universal paint for industry)

| | |
|---|---|
| White pigment (RKB6 manufactured by Tronox; p. white 6): | 90% |
| Barium sulphate (filler) | 6.5% |
| Atmer^{®} 116 (dispersing agent): | 3% |
| Bentone 34 (rheological agent): | 0.5% |

### Example 16 (water-based paint for industry)

| | |
|---|---|
| Blue pigment (Hostaperm Blue B2G-L manufactured by Clariant; p. blue 15:3): | 80% |
| Barium sulphate (filler) | 10% |
| LAD 604+ Nuosperse FN 265 (dispersing agents): | 8% + 2% |

### Example 17 (solvent-based paint for industry)

| | |
|---|---|
| Black pigment (carbon black FW200 manufactured by Evonik; p. black 7): | 50% |
| Laropal A81 (aldehyde resin): | 32% |
| Barium sulphate (filler) | 10% |
| Dispers 685 (dispersing agent): | 8% |

### Example 18 (solvent-based paint for industry)

| | |
|---|---|
| Black pigment (carbon black FW200 manufactured by Evonik; p. black 7): | 80% |
| Barium sulphate + Aerosil R972 (filler): | 8+1% |
| Dispers 685+Adbond LTH (dispersing agents): | 9% + 2% |

### Example 19 (water-based paint for motor-vehicles)

| | |
|---|---|
| Black pigment (carbon black Emperor 2000 manufactured by Cabot; p. black 7): | 50% |
| Degalan VP T (acrylic resin): | 38% |
| (LAD604 (dispersing agent): | 12% |

### Example 20 (water-based paint for industry)

| | |
|---|---|
| Yellow pigment (Bayferroz 3910 manufactured by Lanxess; p. yellow 42): | 90% |
| Barium sulphate (filler) | 3.5% |
| Atmer^{®} 116 (dispersing agent): | 4% |
| CMCAB-641-0.2 (rheological agent): | 2% |
| Bentone 34 (rheological agent): | 0.5% |

### Example 21 (solvent-based paint for industry)

| | |
|---|---|
| Black pigment (carbon black FW200 manufactured by Evonik; p. black 7): | 50% |
| Barium sulphate (filler) | 10% |
| Laropal A81 (aldehyde resin): | 35.5% |
| CAB-381-2 (rheological agent): | 0.5% |
| Dispers 685 (dispersing agent): | 4% |

### Example 22 (POS water-based paint for building sector)

| | |
|---|---|
| White pigment (RKB6 manufactured by Tronox; p. white 6): | 80% |
| Sodium carbonate (accelerating agent): | 10% |
| Tego^{®} Airex 901 W (anti-foaming agent): | 0.5% |
| Barium sulphate (filler) | 6 % |
| Atmer^{®} 116 (dispersing agent): | 3% |
| Bentone 34 (rheological agent): | 0.5% |

### Example 23 (water/solvent-based paint for industry)

| | |
|---|---|
| Yellow pigment (Bayferroz 3910 manufactured by Lanxess; p. yellow 42): | 90% |
| Barium sulphate (filler) | 5.5% |
| Bentone 34 (rheological agent): | 0.5% |
| Atmer^{®} 116 (dispersing agent): | 4% |

### Example 24 (tablets for "POS")

5 kg of the formulation according to Example 22 were mixed in a turbo-mixer Mixaco CM30 for 5 minutes at a speed of 900 rpm; the resultant mixture was used for the preparation of tablets using a KORSCH PH343 press, PR3000 series (mould diameter 5 mm; chamber depth 10 mm; pre-compression pressure 27 bar; compression pre-charging pressure 23 bar; filling depth 9 mm; compression 3.8); about 41,000 tablets with a diameter of 5 mm, thickness of 3.7 mm and weight of 0.12 g were thus obtained.

### Example 25 (tablets for "POS")

5 kg of the formulation according to Example 8 were mixed in a turbo-mixer Mixaco CM30 for 2 minutes at a speed of 900 rpm; the resultant mixture was used for the preparation of tablets using a KORSCH PH343 press, PR3000 series (mould diameter 11 mm; chamber depth 18 mm; pre-compression pressure 27 bar; compression pre-charging pressure 23 bar; filling depth 9 mm; compression 3.8); about 25,000 tablets with a diameter of 11 mm and thickness of 3.5 mm were thus obtained.

## Claims

1. A composition comprising:
(a) 30 to 95% by weight of at least one inorganic and/or organic pigment; and
(b) 0.5% to 30% by weight of a dispersing and/or wetting agent;
and at least one component selected from:
(c) 2 to 50% by weight of at least one solubilization accelerating agent;
(d) 0 to 50% by weight of at least one inorganic filler;
(e) 0 to 10% by weight of at least one binding agent;
(f) 0 to 50% by weight of at least one acrylic, aldehyde and/or ketone resin;
(g) 0.5 to 20% by weight of at least one rheological agent;
(h) 0.5 to 10% by weight of at least one anti-foaming agent.

2. A composition according to Claim 1, **characterized in that** the at least one inorganic and/or organic pigment (a) is present in an amount of 40 to 90% by weight; the at least one dispersing and/or wetting agent (b) is present in an amount of 0.5 to 20% by weight; the at least one optional solubilization accelerating agent (c) is present in an amount of 5 to 40% by weight; the at least one optional inorganic filler (d) is present in an amount of 5 to 30% by weight; the at least one optional binding agent (e) is present in an amount of 0.5 to 5% by weight; the at least one optional acrylic, aldehyde and/or ketone resin (f) is present in an amount of 5 to 40% by weight; the at least one optional rheological agent (g) is present in an amount of 2 to 20% by weight; the at least one optional anti-foaming agent (h) is present in an amount of 2 to 5% by weight.

3. A composition according to Claim 1, **characterized in that** it contains 60 to 90% by weight of inorganic pigment or 40 to 80% by weight of organic pigment.

4. A composition according to Claim 1, **characterized in that** it contains:
(a) 40 to 85% by weight of at least one inorganic and/or organic pigment; and
(b) 2 to 20% by weight of at least one dispersing and/or wetting agent;
and at least one component selected from:
(c) 10 to 40% by weight of at least one solubilization accelerating agent;
(d) 5 to 30% by weight of at least one inorganic filler;
(e) 0.5 to 5% by weight of at least one binding agent;
(f) 5 to 30% by weight of at least one acrylic resin;
(g) 2 to 15% by weight of at least one rheological agent;
(h) 2 to 5% by weight of at least one anti-foaming agent.

5. A composition according to Claim 1, **characterized in that** it contains:
(a) 70 to 90% by weight of at least one inorganic and/or organic pigment; and
(b) 5 to 20% by weight of at least one dispersing and/or wetting agent;
and at least one component selected from:
(c) 5 to 10% by weight of at least one solubilization accelerating agent;
(d) 5 to 20% by weight of at least one inorganic filler;
(e) 0.5 to 5% by weight of at least one binding agent;
(f) 5 to 20% by weight of at least one acrylic resin;
(g) 2 to 15% by weight of at least one rheological agent;
(h) 2 to 5% by weight of at least one anti-foaming agent.

6. A composition according to Claim 1, characterized that the dispersion and/or wetting agent is selected from styrene and polyether copolymers, maleic acid amides, fatty acids derivatives, modified polymers having groups with high affinity for the pigments, modified polyethers having groups with high affinity for the pigments, low molecular weight polymers, alkoxylated fatty alcohols, alkyl ammonium salts, sorbitan esters, epoxidized soybean oils and ethoxylated sorbitan esters.

7. A composition according to Claim 1, **characterized in that** said solubilization accelerating agent is selected from alkaline metal and alkaline-earth carbonates and bicarbonates, preferably sodium carbonate; polyvinylpyrrolidone; polyvinyl alcohols; water-soluble polyethers; ethylene glycols, preferably monoethyleneglycol and polypropyleneglycol; water-soluble acrylates; alcohol ethoxylates; linear alkylbenzene sulphonates, alkyl sulphonates, alcohol ether sulphates; betaine.

8. A composition according to Claim 1, **characterized in that** said inorganic filler is selected from barium sulphate, kaolin and silicon dioxide.

9. A composition according to Claim 1, characterized that said binding agent is selected from modified ketone polymers with groups having an affinity with the pigments, solid bonding resins and lignin sulphonate.

10. A composition according to Clam 1, **characterized in that** said acrylic resin has an acidity number higher than 30, an average molecular weight of between 1000 and 30,000 g/mol and/or a glass transition point of between 40° and 130°C and/or **in that** said aldehyde and/or ketone resin has an average molecular weight of between 800 and 2000 g/mol and/or a glass transition point of between 40° and 60 °C.

11. A composition according to Claim 1, **characterized in that** said rheological agent is selected from bentonite, ethers of cellulose, preferably C₁-C₄ ethers of cellulose, even more preferably hydroxyethyl cellulose; esters of cellulose, preferably C₁-C₄ esters of cellulose, even more preferably cellulose acetate, cellulose acetate propionate, cellulose acetate butyrate; esters of carboxymethyl cellulose, preferably the C₁-C₄ esters of carboxymethyl cellulose, even more preferably carboxymethyl cellulose acetate butyrate.

12. A composition according to Claim 1, **characterized in that** said anti-foaming agent is a siloxane polyether copolymer.

13. A composition according to Claim 1, **characterized in that** it is in the form of tablets.

14. A composition according to Claim 13, **characterized in that** said tablets have a diameter of between 2 and 20 mm, preferably between 3 and 16 mm, and height of between 1 and 14 mm, preferably between 2 and 10 mm.

15. Use of the composition according to any one of Claims 1 to 14 for the preparation of a water-based liquid paint.

16. A process for the preparation of a composition according to any one of Claims 1 to 14, **characterized in that** it comprises mixing and simultaneous grinding of the components (a) and (b) and of at least one of the components (c), (d), (e), (f), (g) and (h) and, optionally, the subsequent compression of the mixture thus obtained.

17. A process according to Claim 16, **characterized in that** said mixing and simultaneous grinding comprise an intermediate stage involving extrusion of the mixture thus obtained.

18. A process according to either one of Claims 16 and 17, **characterized in that** said mixing is performed at a speed of between 500 and 1500 rpm and preferably between 800 and 1000 rpm.

19. A process according to Claim 17, **characterized in that** said extrusion is performed in the dry state.
